# FASCICULE DE BREVET EUROPEEN

(11) **EP 1 545 910 B1**
(45) Date de publication et mention de la délivrance du brevet: **17.07.2013**
(21) Numéro de dépôt: 03792266.3
(22) Date de dépôt: 06.08.2003
(51) Int. Cl.: B60C 9/20, B60C 9/22

(54) **PNEUMATIQUE POUR DEUX ROUES**
REIFEN FÜR ZWEIRÄDRIGE FAHRZEUGE
TYRE FOR TWO-WHEELED VEHICLES

(30) Priorité: 09.08.2002 FR 0210187; 18.11.2002 FR 0214415
(43) Date de publication de la demande: 29.06.2005
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: VALLE, Alain, F-63118 Cebazat (FR); PROST, Pascal, F-63200 Riom (FR); GUERINON, Bernard, F-63100 Clermont-Ferrand (FR)
(74) Mandataire: Le Cam, Stéphane Georges Elie
(86) Numéro de dépôt international: PCT/EP2003/008708
(87) Numéro de publication internationale: WO 2004/018237

(56) Documents cités:
- EP-A- 0 791 485
- EP-A- 0 850 787
- BE-A- 564 481
- DE-A- 2 118 748
- FR-A- 2 130 619
- PATENT ABSTRACTS OF JAPAN vol. 1999, no. 05, 31 mai 1999 (1999-05-31) & JP 11 048706 A (BRIDGESTONE CORP), 23 février 1999 (1999-02-23)

## Description

La présente invention concerne un pneumatique destiné à équiper un véhicule à deux roues tel qu'une motocyclette.

L'armature de renforcement ou renforcement des pneumatiques et notamment des pneumatiques de motocyclette est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base tels les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

Il est notamment connu des documents DE-A- 2 118 748, FR-A- 2 130 619, EP-A-0 791 485 et BE-A- 464 481 de réaliser des pneumatiques pour véhicule à quatre roues comportant des nappes d'éléments de renforcement, lesdites nappes étant réalisés par un élément de renforcement continu formant des tronçons reliés par des boucles pour éviter la présence d'extrémités libres.

De même le document JP -A- 1048 706 décrit des éléments de renforcement continus formant des tronçons présentant des formes non rectilignes et reliés par des boucles.

Comme dans le cas de tous les autres pneumatiques, on assiste à une radialisation des pneumatiques pour motos, l'architecture de tels pneumatiques comprenant une armature de carcasse formée d'une ou deux nappes d'éléments de renforcement faisant avec la direction circonférentielle un angle pouvant être compris entre 65° et 90°, ladite armature de carcasse étant radialement surmontée d'une armature de sommet formée au moins d'éléments de renforcement généralement textiles. Il subsiste toutefois des pneumatiques non radiaux auquel se rapporte également l'invention. L'invention se rapporte encore à des pneumatiques partiellement radiaux, c'est-à-dire dont les éléments de renforcement de l'armature de carcasse sont radiaux sur au moins une partie de ladite armature de carcasse, par exemple dans la partie correspondant au sommet du pneumatique.

De nombreuses architectures d'armature de sommet ont été proposées, selon que le pneumatique sera destiné à la monte à l'avant de la moto ou à la monte à l'arrière. Une première structure consiste, pour ladite armature de sommet, à employer uniquement des câbles circonférentiels, et ladite structure est plus particulièrement employée pour la position arrière. Une deuxième structure, directement inspirée des structures couramment employées en pneumatiques pour véhicules de Tourisme, a été utilisée pour améliorer la résistance à l'usure, et consiste dans l'utilisation d'au moins deux nappes de sommet d'éléments de renforcement parallèles entre eux dans chaque nappe mais croisés d'une nappe à la suivante en faisant avec la direction circonférentielle des angles aigus, de tels pneumatiques étant plus particulièrement adaptés pour l'avant des motos. Les dites deux nappes de sommet peuvent être surmontées radialement d'au moins une nappe d'éléments circonférentiels, généralement obtenus par enroulement hélicoïdal d'une bandelette d'au moins un élément de renforcement enrobé de caoutchouc. Le brevet FR 2 561 588 décrit ainsi une telle armature de sommet, avec au moins une nappe dont les éléments de renforcement font avec la direction circonférentielle un angle pouvant varier entre 0° et 8°, le module d'élasticité de tels éléments s'élevant à au moins 6000 N/mm², et, disposée entre l'armature de carcasse et la nappe d'éléments circonférentiels, d'une couche d'amortissement formée principalement de deux nappes d'éléments croisés d'une nappe à la suivante en faisant entre eux des angles compris entre 60° et 90°, les dites nappes croisées étant formées d'éléments de renforcement textiles ayant un module d'élasticité d'au moins 6000 N/mm².

Le document EP 0 456 933, en vue de conférer à un pneumatique pour moto une excellente stabilité à grande vitesse ainsi qu'une excellente propriété de contact avec le sol, enseigne par exemple de constituer une armature de sommet avec au moins deux nappes : une première nappe, radialement la plus proche de l'armature de carcasse étant composée de câbles orientés avec un angle compris entre 40° et 90° par rapport à la direction circonférentielle et la deuxième nappe, la plus proche radialement de la bande de roulement étant composée de câbles enroulés hélicoïdalement dans la direction circonférentielle.

Le brevet US 5 301 730, conforme au préambule de la revendication 1, en vue d'augmenter la motricité d'un pneumatique pour position arrière d'une moto, propose une armature de sommet composée, en allant de l'armature de carcasse radiale à la bande de roulement, d'au moins une nappe d'éléments sensiblement circonférentiels et de deux nappes d'éléments croisés d'une nappe à la suivante en faisant avec la direction circonférentielle un angle pouvant être compris entre 35° et 55°, la nappe d'éléments parallèles à la direction circonférentielle pouvant être formée d'éléments en polyamide aromatique, et les nappes d'éléments croisés en polyamide aliphatique.

La réalisation de pneumatiques pour motocyclettes conduit à des valeurs de courbures importantes pour une utilisation desdits pneumatiques en carrossage. L'invention vise notamment à améliorer les propriétés d'adhérence et de motricité des pneumatiques pour une utilisation en fort carrossage.

Les études réalisées dans ce cadre ont notamment mis en évidence que la présence de couches d'éléments de renforcement présentant un angle avec la direction longitudinale conduit à des rigidités locales, circonférentielles et de cisaillement, qui diminuent à l'approche des bords desdites couches, la tension aux extrémités des éléments de renforcement étant nulle. Une tension locale nulle des éléments de renforcement se traduit par une moindre efficacité desdits éléments de renforcement dans cette zone. Or, les rigidités des bords des couches sont particulièrement importantes lorsque le pneumatique est utilisé dans les plus forts carrossages, en courbe, la partie du pneumatique correspondant à ces zones se trouvant alors en regard du sol.

L'invention a pour but d'améliorer encore la qualité des pneumatiques pour motocyclettes, sans nuire pour autant aux autres propriétés, nécessaires à la satisfaction des utilisateurs. Plus spécifiquement l'invention vise l'amélioration des pneumatiques comportant au moins une couche d'éléments de renforcement faisant un angle avec la direction longitudinale.

Ce but a été atteint selon l'invention par un pneumatique tel que défini à la revendication 1.

Avantageusement, dans le cas d'une structure radiale, les éléments de renforcement de la structure de renfort de type carcasse font avec la direction circonférentielle un angle compris entre 65° et 90°.

Selon une réalisation préférée de l'invention, dans la zone centrale de ladite couche de travail, les tronçons sont équidistants les uns des autres selon tous plans circonférentiels.

Des variantes selon d'autres réalisations avantageuses de l'invention prévoient encore que des motifs de tronçons sont équidistants les uns des autres selon tous plans circonférentiels. Par motif de tronçons, on entend un ensemble de plusieurs tronçons disposé selon une configuration donnée et qui est reproduit.

La direction longitudinale du pneumatique, ou direction circonférentielle, est la direction correspondant à la périphérie du pneumatique et définie par la direction de roulement du pneumatique.

Un plan circonférentiel ou plan circonférentiel de coupe est un plan perpendiculaire à l'axe de rotation du pneumatique. Le plan équatorial est le plan circonférentiel passant par le centre ou sommet de la bande de roulement.

La direction transversale ou axiale du pneumatique est parallèle à l'axe de rotation du pneumatique.

La zone centrale d'une couche de travail est une zone circonférentielle de ladite couche axialement comprise entre deux zones latérales, axialement extérieures à ladite zone centrale. Cette zone centrale est selon une réalisation préférée de l'invention centrée sur le sommet de la bande de roulement du pneumatique.

Le terme « fil » désigne en toute généralité, aussi bien des mono-filaments, des fibres multifilamentaires (éventuellement tordues sur elles-mêmes) ou des assemblages comme des câbles textiles ou métalliques, des retors ou bien encore n'importe quel type d'assemblage équivalent comme par exemple un câble hybride, et ceci, quelle que soient la ou les matières, le traitement éventuel de ces fils, par exemple un traitement de surface ou enrobage, ou préencollage, pour favoriser l'adhésion sur le caoutchouc ou toute autre matière.

Selon l'invention, la couche de travail est réalisée avec au moins un fil dont aucune extrémité libre n'est présente sur les bords de ladite couche. De préférence, la réalisation de la couche est faite avec un seul fil et la couche est du type « mono-fil ». Toutefois, la réalisation industrielle de telles couches conduit à des discontinuités notamment dues à des changements de bobine. Une réalisation préférée de l'invention consiste donc à n'utiliser qu'un seul ou un faible nombre de fils pour une couche de travail et il convient de disposer les débuts et fins de fils dans la zone centrale de ladite couche.

Un pneumatique selon l'invention ainsi réalisé comporte une structure de renforcement sous la bande de roulement qui ne présente aucune extrémité libre des éléments de renforcement au niveau des bords axialement extérieurs des couches de travail.

Dans la zone centrale des couches de travail, c'est-à-dire dans la partie des couches de travail qui n'englobe pas les boucles liant les tronçons entre eux, les tronçons présentent des angles, formés avec la direction longitudinale, identiques, lesdits angles étant mesurés aux points d'intersections avec un plan circonférentiel, quel que soit ledit plan circonférentiel. En d'autres termes, pour un plan circonférentiel de coupe donné, les tronçons présentent tous le même angle formé avec la direction longitudinale aux points d'intersections avec ledit plan circonférentiel de coupe.

Un tel pneumatique est avantageusement réalisé selon une technique du type sur noyau dur ou toroïdal qui autorise notamment la mise en place des éléments de renforcement dans la position quasi-finale ; en effet, une étape de conformation n'étant pas requise selon ce type de procédé les éléments de renforcement ne sont plus déplacés après leur mise en place. Si une technique comportant une étape de mise en forme, telle qu'une conformation ou l'application d'une nappe plane sur le profil du pneumatique, est utilisée, la courbure d'un pneu moto nécessite de préparer une nappe particulière pour pouvoir obtenir des tronçons, présentant des angles identiques et éventuellement équidistants les uns des autres selon tous plans circonférentiels, liés par une boucle ; notamment aux extrémités de la nappe et donc au niveau des boucles, la conformation selon la courbure d'un pneumatique pour motocyclette conduit à des variations notamment sur les bords du pneumatique qui modifient la position des éléments de renforcement. Cette modification des positions est en outre perturbée par la présence des boucles qui entraînent des modifications non homogènes. De ce fait, les différents tronçons ne présentent pas des angles, formés avec la direction longitudinale, identiques dans des plans circonférentiels de coupe. De même, ils ne sont pas équidistants les uns des autres dans des plans circonférentiels de coupe.

Selon l'invention, afin d'optimiser les rigidités de la structure de renforcement le long du méridien du pneumatique, et en particulier aux bords des couches de travail, les angles formés par lesdits tronçons du fil des couches de travail avec la direction longitudinale sont variables selon la direction transversale tels que lesdits angles sont supérieurs sur les bords axialement extérieurs des couches d'éléments de renforcement par rapport aux angles desdits tronçons mesurés au niveau du plan équatorial du pneumatique.

L'utilisation d'une technique du type sur noyau dur qui autorise notamment la mise en place des éléments de renforcement dans la position quasi-finale sans nécessité d'étape de conformation présente encore des avantages. En effet, une technique du type sur noyau dur autorise notamment de manière simple des variations d'angles nettement supérieures à ce qu'il est possible d'obtenir selon des procédés comportant une étape de conformation. En outre, lesdites variations d'angle, ledit angle tendant vers 90° aux bords des couches de travail, conduit à une augmentation du pas et favorise la réalisation des boucles, du fait de la réduction de l'encombrement.

Avantageusement, dans le cas d'une structure radiale, les éléments de renforcement de la structure de renfort de type carcasse font avec la direction circonférentielle un angle compris entre 65° et 90°.

Selon des réalisations préférées de l'invention, les tronçons forment un angle avec la direction longitudinale compris entre 20 et 75°. De préférence, l'angle est inférieur à 50° et de préférence encore inférieur à 40°.

Selon une réalisation préférée de l'invention, la structure de renforcement de sommet du pneumatique comporte au moins deux couches d'éléments de renforcement telles que d'une couche à la suivante les tronçons forment entre eux des angles compris entre 20 et 160° et de préférence entre 40 et 100°.

Un premier mode de réalisation de la variante de réalisation de l'invention selon laquelle les angles formés par lesdits tronçons du fil des couches de travail avec la direction longitudinale sont variables selon la direction transversale, consiste à faire varier l'angle des tronçons d'une manière monotone depuis le plan équatorial du pneumatique jusqu'aux bords de la couche de travail.

Un second mode de réalisation de cette variante consiste à faire évoluer l'angle par palier depuis le plan équatorial du pneumatique jusqu'aux bords de la couche de travail.

Un dernier mode de réalisation de cette variante consiste en une évolution de l'angle telle que des valeurs données soient obtenues pour des positions axiales données.

Ces différents modes de réalisation de la variante de réalisation de l'invention selon laquelle les angles formés par lesdits tronçons du fil des couches de travail avec la direction longitudinale sont variables selon la direction transversale permettent en d'autres termes, d'obtenir une forte rigidité circonférentielle de la structure de renforcement du sommet par la présence d'angles fermés, c'est-à-dire faibles, dans la zone du sommet du pneu, c'est-à-dire dans la zone encadrant le plan équatorial. Et au contraire la présence d'angles ouverts, c'est-à-dire d'angles tendant vers 45°, voir au-delà vers 90°, peut être obtenue sur les bords de la couche de travail ou plus exactement au niveau des épaules du pneumatique pour améliorer l'adhérence, la motricité, le confort, ou encore la température de fonctionnement du pneumatique ; en effet, de telles variations d'angles permettent de moduler les rigidités de cisaillement des couches de travail.

Une réalisation préférée de l'invention prévoit que le pneumatique est notamment constitué d'une structure de renforcement de sommet qui comporte en outre au moins une couche d'éléments de renforcement circonférentiels ; selon l'invention, la couche d'éléments de renforcement circonférentiels est constituée d'au moins un élément de renforcement orienté selon un angle formé avec la direction longitudinale inférieur à 5°.

La présence d'une couche d'éléments de renforcement circonférentiels est notamment préférable pour la réalisation d'un pneumatique destiné à être utilisé à l'arrière d'une motocyclette.

Une réalisation avantageuse de l'invention prévoit que la couche d'éléments de renforcement circonférentiels est positionnée au moins partiellement sur une couche de travail. Lorsque la couche d'éléments de renforcement circonférentiels est réalisée sur deux couches de travail et placée directement sous la bande de roulement, elle peut notamment contribuer à l'amélioration de la stabilité à haute vitesse.

La couche d'éléments de renforcement circonférentiels peut ainsi être réalisée directement sous la bande de roulement pour former outre sa fonction première une couche de protection de la carcasse et des autres couches de la structure de renforcement de sommet, contre des agressions mécaniques éventuelles.

La couche d'éléments de renforcement circonférentiels peut encore être réalisée entre les couches de travail, notamment par souci économique, la quantité de matière et le temps de pose étant ainsi diminués.

Une autre réalisation avantageuse de l'invention prévoit que la couche d'éléments de renforcement circonférentiels est positionnée au moins partiellement radialement à l'intérieur de la couche de travail radialement la plus à l'intérieure. Selon cette réalisation, la couche d'éléments de renforcement circonférentiels est réalisée radialement à l'intérieur des couches de travail et peut notamment permettre d'améliorer l'adhérence et la motricité du pneumatique.

Une autre variante de l'invention prévoit qu'au moins une couche d'éléments de renforcement circonférentiels est positionnée au moins partiellement radialement à l'intérieur de la structure de renfort de type carcasse. Cette variante de réalisation peut encore reprendre les différents positionnements évoqués précédemment par rapport aux couches de travail. La carcasse peut ainsi couvrir la structure complète de renforcement de sommet. De préférence, l'invention prévoit qu'au moins une couche de renforcement de sommet est mise en place entre la carcasse et la bande de roulement pour assurer une protection de la carcasse.

Il faut noter qu'un pneumatique selon l'invention, notamment lorsqu'au moins une partie de la structure de renforcement de sommet est réalisée radialement à l'intérieur de la structure de carcasse, est avantageusement réalisé selon une technique de fabrication du type sur noyau dur ou forme rigide.

Une réalisation avantageuse de l'invention prévoit que la structure de renfort de type carcasse est constituée de deux demi-nappes s'étendant par exemple des épaules aux bourrelets. Selon la nature, la quantité et la disposition des éléments de renfort de sommet, l'invention prévoit effectivement la suppression de la structure de carcasse dans au moins une partie de la zone du pneumatique se trouvant sous la bande de roulement. La réalisation d'une telle structure de carcasse peut être faite selon l'enseignement du document EP-A-0 844 106. Les positions relatives précédemment énoncées des différentes couches de la structure de renforcement de sommet sont également compatibles avec une telle structure de carcasse.

Selon une réalisation préférée de l'invention, les éléments de renforcement des couches de travail sont en matériau textile.

De préférence également, les éléments de renforcement de la couche d'éléments de renforcement circonférentiels sont métalliques et/ou textiles et/ou en verre. L'invention prévoit notamment l'utilisation d'éléments de renforcement de natures différentes dans une même couche d'éléments de renforcement circonférentiels.

De préférence encore, les éléments de renforcement de la couche d'éléments de renforcement circonférentiels présentent un module d'élasticité supérieur à 6000 N/mm².

Dans une variante avantageuse de l'invention, une couche d'éléments de renforcement circonférentiels peut être réalisée en plusieurs parties mises en place en différentes positions radiales ou différents niveaux du pneumatique. Un tel pneumatique peut notamment comporter une partie de la couche d'éléments de renforcement circonférentiels radialement à l'extérieur des autres éléments de renforcement dans la partie centrale du pneumatique, c'est-à-dire sous la partie centrale de la bande de roulement. Cette partie de la couche d'éléments de renforcement circonférentiels permet alors notamment une protection de la carcasse contre d'éventuelles agressions pouvant intervenir par la partie centrale de la bande de roulement, considérée comme la plus exposée. Des parties latérales de la couche d'éléments de renforcement circonférentiels, indépendantes de la partie centrale de ladite couche d'éléments de renforcement circonférentiels, peuvent être positionnées à tous niveaux, c'est-à-dire soit radialement à l'intérieur des couches de travail soit entre-elles soit encore radialement à l'intérieur de la couche de carcasse, notamment en vue de diminuer la quantité d'éléments de renforcement et le temps de réalisation d'une telle couche d'éléments de renforcement circonférentiels. L'invention prévoit encore, dans le cas d'une couche d'éléments de renforcement circonférentiels réalisée en plusieurs parties mises en place en différentes positions radiales, que la répartition de ces différentes parties ne soit pas réalisée de manière symétrique par rapport au plan équatorial, ou plan circonférentiel passant par le centre du sommet du pneumatique. Une telle répartition non symétrique peut en outre être liée à un choix de matériaux différents des éléments de renforcement circonférentiels comme énoncé précédemment.

Conformément à ce type de réalisation d'une couche d'éléments de renforcement circonférentiels fractionnée en plusieurs parties, l'invention prévoit avantageusement un recouvrement des extrémités axiales desdites parties entre-elles.

D'autres détails et caractéristiques avantageux de l'invention ressortiront ci-après de la description des exemples de réalisation de l'invention en référence aux figures 1 à 6 qui représentent:
- figure 1, une vue méridienne d'un schéma d'un pneumatique selon un mode de réalisation de l'invention,
- figure 2, une représentation schématique d'une couche de travail selon une première réalisation de l'invention,
- figure 3, une représentation schématique d'une couche de travail selon une seconde réalisation de l'invention,
- figure 4, une vue méridienne d'un schéma d'un pneumatique selon un second mode de réalisation de l'invention,
- figure 5, une vue méridienne d'un schéma d'un pneumatique selon un troisième mode de réalisation de l'invention,
- figure 6, une vue méridienne d'un schéma d'un pneumatique selon un quatrième mode de réalisation de l'invention.

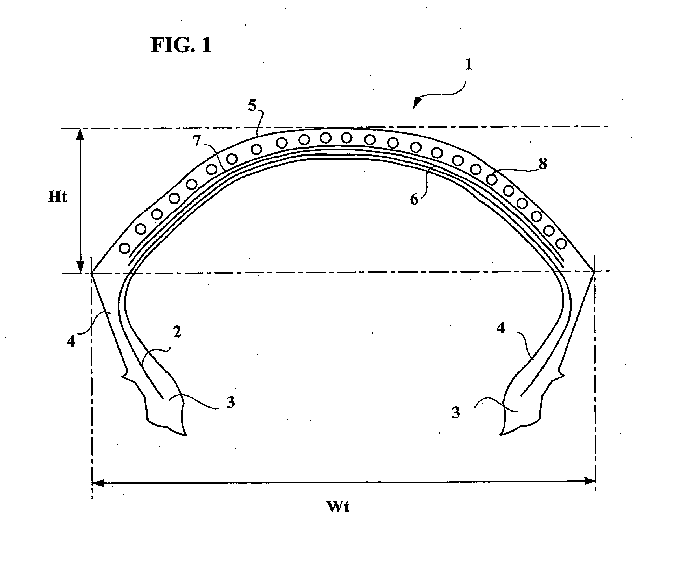

Les figures 1 à 6 ne sont pas représentées à l'échelle pour en simplifier la compréhension.

La figure 1 représente un pneumatique 1 comprenant une armature de carcasse constituée d'une seule couche 2 comprenant des éléments de renforcement de type textile. La couche 2 est constituée d'éléments de renforcement disposés radialement. Le positionnement radial des éléments de renforcement est défini par l'angle de pose desdits éléments de renforcement ; une disposition radiale correspond à un angle de pose desdits éléments par rapport à la direction longitudinale du pneumatique compris entre 65° et 90°.

Ladite couche de carcasse 2 est ancrée de chaque côté du pneumatique 1 dans un bourrelet 3 dont la base est destinée à être montée sur un siège de jante. Chaque bourrelet 3 est prolongé radialement vers l'extérieur par un flanc 4, ledit flanc 4 rejoignant radialement vers l'extérieur la bande de roulement 5. Le pneumatique 1 ainsi constitué présente une valeur de courbure supérieure à 0.15 et de préférence supérieure à 0.3. La valeur de courbure est définie par le rapport Ht/Wt, c'est-à-dire par le rapport de la hauteur de la bande de roulement sur la largeur maximale de la bande de roulement du pneumatique. La valeur de courbure sera avantageusement comprise entre 0.25 et 0.5 pour un pneumatique destiné à être monté à l'avant d'une motocyclette et elle sera avantageusement comprise entre 0.2 et 0.5 pour un pneumatique destiné à être monté à l'arrière.

Entre la carcasse et la bande de roulement est mise en place une armature de sommet constituée dans le cas présent de deux couches de travail 6, 7 et d'une couche d'éléments de renforcement circonférentiels 8. La couche d'éléments de renforcement circonférentiels est sur la figure 1 la partie de l'armature de sommet radialement extérieure et les deux couches de travail 6, 7 sont intercalées entre la couche de carcasse 2 et la couche d'éléments de renforcement circonférentiels 8. La couche d'éléments de renforcement circonférentiels est avantageusement constituée d'un seul fil enroulé pour former un angle avec la direction longitudinale sensiblement égal à 0°. La couche d'éléments de renforcement circonférentiels peut encore être réalisée par l'enroulement simultané de plusieurs fils nus ou sous forme de bandelettes lorsqu'ils sont noyés dans du caoutchouc.

Les couches de travail 6, 7 sont constituées de renforts textiles réalisés selon l'invention avec au moins un fil continu de renforcement formant dans la zone centrale de ladite couche des tronçons parallèles et les tronçons adjacents étant reliés par des boucles. La disposition des fils est telle que les tronçons sont croisés d'une couche 6 à la couche 7 suivante.

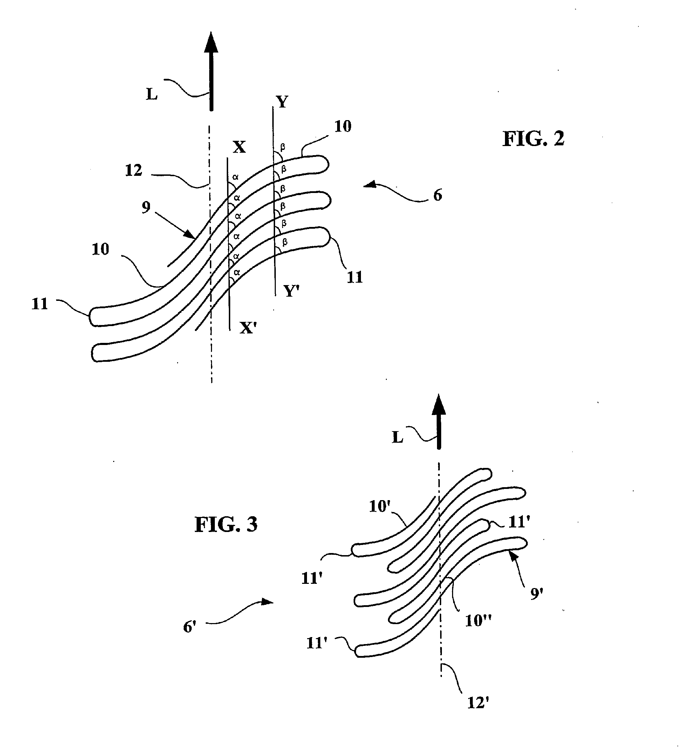

La figure 2 illustre un exemple de réalisation selon l'invention d'une telle couche de travail 6 constituée d'un seul fil 9 mis en place pour former des tronçons 10. Deux tronçons adjacents sont reliés par des boucles 11. L'orientation des tronçons 10 est telle qu'ils forment avec la direction longitudinale L un angle compris entre 10 et 80°. Sur cette représentation de la figure 2 les tronçons sont réalisés avec un angle variable de sorte qu'aux bords de la couche de travail 6, ledit angle devient plus important. Une telle variante de réalisation permet notamment de conférer une forte rigidité circonférentielle autour de l'équateur, c'est-à-dire dans la partie centrale du pneumatique où les angles desdits tronçons sont les plus petits pour résister à la centrifugation. Au contraire les angles les plus grands en bordure de couche de travail 6 et avantageusement au niveau des épaules permettent de favoriser l'adhérence et la motricité du pneumatique en carrossage en optimisant la rigidité de cisaillement des couches de travail lorsque l'angle se situe autour de 45° ou bien de favoriser le confort en carrossage lorsque l'angle approche 90°.

Sur la figure 2 sont également représentés deux plans circonférentiels de coupe XX' et YY' et les angles α et β formés par les éléments de renforcement avec la direction longitudinale aux différents points d'intersections avec lesdits plans circonférentiels XX' et YY'. Les angles α d'une part et β d'autre part sont identiques quel que soit l'élément de renforcement considéré. Par ailleurs, les angles α et β sont différents l'un de l'autre.

La figure 2 montre également lorsque la couche 6 est centrée sur le sommet ou équateur du pneumatique que l'équateur forme une ligne 12 comprenant les points d'inflexion des tronçons 10 formés par le fil 9.

La figure 3 illustre une autre variante de réalisation de l'invention proche de celle de la figure 2 selon laquelle la longueur des tronçons n'est pas régulière. Dans le cas de la figure 3, le fil 9' est déposé pour former des tronçons 10', 10" de deux longueurs différentes. Une telle configuration permet d'obtenir des variations de densité selon la direction axiale, la quantité d'éléments de renforcement variant selon cette même direction. Des variations de densité de ce type sont d'autant plus intéressantes dans la conception de pneumatiques pour motocyclettes pour optimiser et adapter des rigidités différentes des couches de travail requises entre les positions ligne droite et les diverses positions inclinées du pneumatique du fait des parties différentes de la bande de roulement et de la structure de renforcement qui sont en regard avec le sol.

Dans le cas de la figure 3, il est prévu deux longueurs de tronçons différentes mais l'invention ne doit pas être interprétée comme limitée à ce cas de figure, le nombre de longueurs différentes de tronçons pouvant être plus important.

Selon l'une ou l'autre des réalisations représentées sur les figures 2 et 3, la réalisation des couches 6 et 6' est de préférence réalisée avec un seul fil. Toutefois pour différentes raisons, volontaires ou non, dans le cas ou plusieurs fils sont utilisés pour réaliser une couche de travail 6, 7, 6', 7', les extrémités desdits fils se trouvent dans la partie centrale du pneumatique. Plus précisément, aucune extrémité libre n'apparaît sur les bords des couches de travail ; seules sont présentes à ce niveau des couches de travail les boucles 11, 11'.

Par ailleurs, concernant la mise en oeuvre de la réalisation d'un tel pneumatique, celle-ci est avantageusement obtenue par une fabrication du type sur noyau dur. Ainsi la pose des fils 9, 9' peut être réalisée par un automate qui vient les déposer précisément avec les angles voulus dans leur position quasi-finale. En effet, une fabrication du type sur noyau dur autorise un positionnement précis des fils car le noyau dur imposant la forme de la cavité intérieure requise, le profil du pneumatique ne subit pas de modification lors de la confection.

Des variantes de réalisation de la figure 1 peuvent prévoir un empilement différent desdites couches constituant l'armature de sommet. En effet, notamment pour diminuer les coûts en termes de matière et également en termes de rendement ou de temps de fabrication, l'invention prévoit de réaliser la couche d'éléments de renforcement circonférentiels entre les deux couches de travail ou bien encore radialement à l'intérieur des couches de travail.

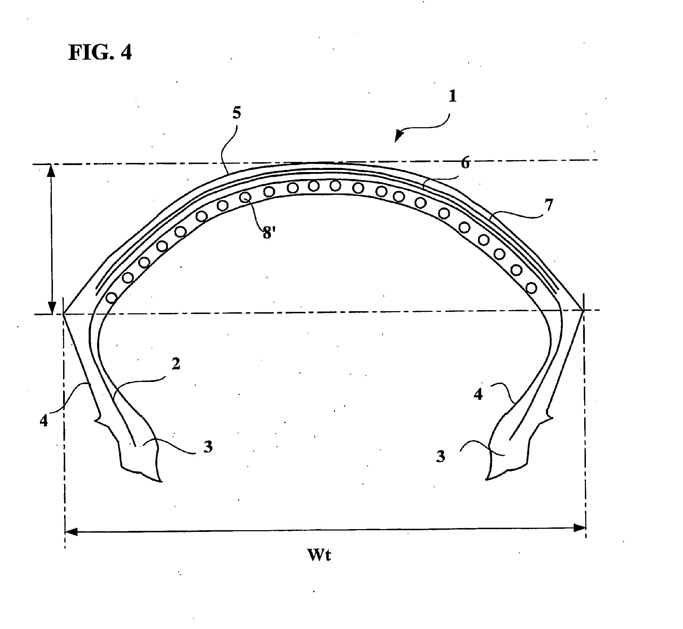

La figure 4 représente une variante de réalisation de la figure 1. Selon cette variante de réalisation, la couche d'éléments de renforcement circonférentiels 8' est réalisée radialement à l'intérieur de la couche de carcasse 2 radialement recouverte de deux couches 6 et 7 semblables à celles de la figure 1. Une réalisation de ce type autorise comme évoqué précédemment un gain économique de deux ordres. Tout d'abord, la quantité de matière utilisée pour réaliser une couche d'éléments de renforcement circonférentiels identique à celle de la figure 1 est diminuée du fait de la position radiale inférieure de la couche 8' pour un même pneumatique en termes de dimensions. Et en conséquence, le temps de pose du fil de renforcement de la dite couche 8' est inférieur à celui nécessaire pour la réalisation de la couche du pneumatique représenté sur la figure 1.

D'autres variantes du même type peuvent être réalisées avec une mise en place différente des différentes couches constituant l'armature de sommet. De la même façon que pour les variantes de réalisation envisagées dans le cas de la figure 1, la couche d'éléments de renforcement circonférentiels peut être positionnée entre ou radialement à l'extérieur des couches de travail. De telles réalisations conduisent à des réalisations selon lesquelles au moins une des couches de travail est mise en place radialement à l'intérieur de la nappe de carcasse.

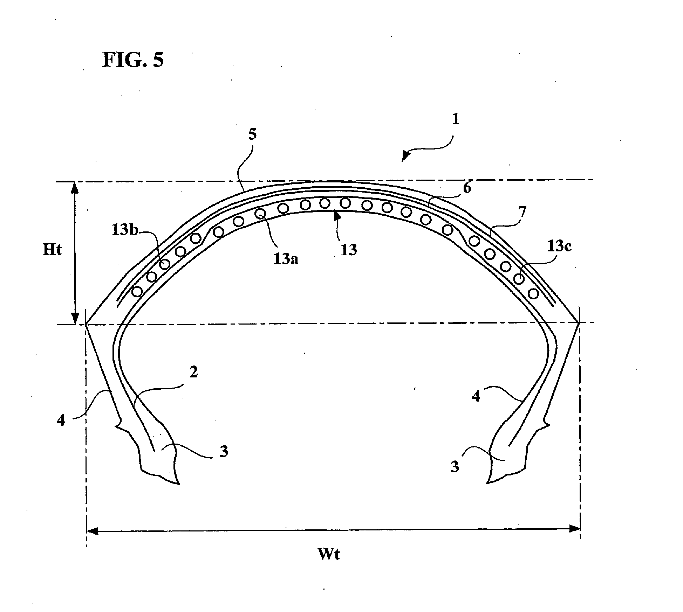

La figure 5 représente un mode de réalisation de l'invention selon lequel la couche d'éléments de renforcement circonférentiels 13 est réalisée en plusieurs parties 13a, 13b, 13c mises en place sur le pneumatique à des niveaux radialement différents. De telles réalisations permettent par exemple de conserver localement un rôle de protection de la couche d'éléments de renforcement circonférentiels notamment à l'égard de la nappe carcasse et de diminuer par ailleurs les coûts de fabrication en réalisant partiellement ladite couche d'éléments de renforcement circonférentiels dans des positions radialement inférieures. Ce choix peut également influencer d'autres propriétés du pneumatique qui ne sont recherchées que localement. Dans le cas représenté sur la figure 5, la position des parties axialement extérieures 13b, 13c radialement à l'intérieur des couches de travail 6, 7 autorise notamment l'amélioration de la stabilité à forts carrossages.

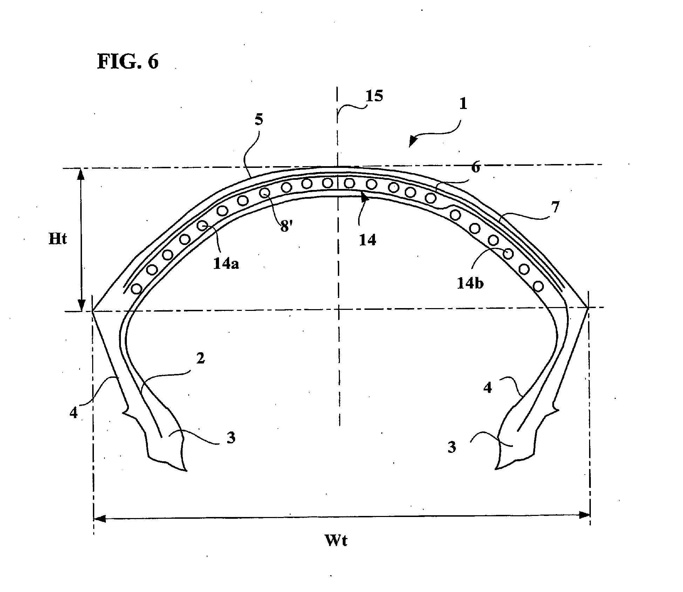

La figure 6 représente, comme dans le cas de la figure 5, un mode de réalisation de l'invention selon lequel la couche d'éléments de renforcement circonférentiels 14 est réalisée en plusieurs parties 14a, 14b, mises en place sur le pneumatique à des niveaux radialement différents. Contrairement au cas de la figure 5, la représentation faite sur cette figure 6 ne présente pas de symétrie par rapport au plan équatorial 15. Une telle réalisation peut notamment être recherchée lorsque l'usage du pneumatique ne sera lui même pas symétrique ; par exemple, dans le cas de pneumatiques devant être utilisés sur des circuits spécifiques sollicitant le pneumatique en carrossage selon essentiellement un côté. En effet, la réalisation d'un tel pneumatique peut notamment être intéressante pour un usage sur piste où la majorité des courbes ou virages sont dans la même direction.

Une telle réalisation de la couche d'éléments de renforcement circonférentiels en plusieurs parties peut encore être combinée aux différentes variantes de réalisation de l'invention présentées précédemment. Il est notamment possible de réaliser une couche d'éléments de renforcement circonférentiels partiellement radialement à l'intérieur ou à l'extérieur ou entre les couches de travail 6, 7.

Les différentes variantes de réalisation de l'invention qui viennent d'être décrites autorisent la réalisation de pneumatiques pour motocyclettes dans lesquelles aucune extrémité libre des éléments de renforcement n'est présente sur les bords des couches de travail. Cette caractéristique de l'invention permet d'améliorer la qualité et plus particulièrement l'adhérence, la motricité, le confort, ou encore la température de fonctionnement des pneumatiques sans nuire aux différentes propriétés recherchées liées à la réalisation desdits pneumatiques.

## Revendications

1. Pneumatique (1) pour un véhicule motorisé à deux roues tel qu'une motocyclette comportant au moins une structure de renfort de type carcasse (2), formée d'éléments de renforcement, ancrée de chaque côté du pneumatique à un bourrelet (3) dont la base est destinée à être montée sur un siège de jante, chaque bourrelet (3) se prolongeant radialement vers l'extérieur par un flanc (4), les flancs rejoignant radialement vers l'extérieur une bande de roulement (5), et comportant sous la bande de roulement une structure de renforcement de sommet constituée d'au moins une couche (6, 7) d'éléments de renforcement dite couche de travail, **caractérisé en ce que** ladite couche (6, 7) est constituée d'au moins un fil continu (9) de renforcement formant dans la zone centrale de ladite couche des tronçons (10) présentant des angles (α, β), formés avec la direction longitudinale L, identiques, lesdits angles étant mesurés aux points d'intersections avec un plan circonférentiel (XX', YY'), **en ce que** deux tronçons (10) adjacents sont liés par une boucle (11), **en ce que** les tronçons (10) forment un angle (α, β) avec la direction longitudinale compris entre 10 et 80°, **en ce que** les angles (α, β) formés par lesdits tronçons avec la direction longitudinale sont variables selon la direction transversale et **en ce que** lesdits angles (β) sont supérieurs sur les bords axialement extérieurs des couches d'éléments de renforcement par rapport aux angles desdits tronçons (10) mesurés au niveau du plan équatorial (12) du pneumatique.

2. Pneumatique (1) selon la revendication 1, **caractérisé en ce que** dans la zone centrale de ladite couche (6) les tronçons (10) sont équidistants les uns des autres selon tous plans circonférentiels.

3. Pneumatique (1) selon la revendication 1 ou 2, **caractérisé en ce que** la structure de renforcement de sommet comporte au moins deux couches (6, 7) d'éléments de renforcement et **en ce que** d'une couche à la suivante les tronçons (10) forment entre eux des angles compris entre 20 et 160°.

4. Pneumatique (1) selon la revendication 1 à 3, **caractérisé en ce que** les angles (α, β) des tronçons (10) varient d'une manière monotone depuis le plan équatorial (12) du pneumatique jusqu'aux bords de la couche de travail (6).

5. Pneumatique (1) selon la revendication 1 à 3, **caractérisé en ce que** les angles (α, β) des tronçons (10) varient par palier depuis le plan équatorial (12) du pneumatique jusqu'aux bords de la couche de travail (6).

6. Pneumatique (1) selon l'une des revendications 1 à 5, **caractérisé en ce que** les éléments de renforcement de la structure de renfort de type carcasse (2) font avec la direction circonférentielle un angle compris entre 65° et 90°.

7. Pneumatique (1) selon l'une des revendications 1 à 6, **caractérisé en ce que** la structure de renforcement de sommet comporte au moins une couche d'éléments de renforcement circonférentiels (8).

8. Pneumatique (1) selon la revendication 7, **caractérisé en ce que** la couche d'éléments de renforcement circonférentiels (8) est positionnée au moins partiellement radialement à l'extérieur d'une couche de travail (6, 7).

9. Pneumatique (1) selon la revendication 7 ou 8, **caractérisé en ce que** la couche d'éléments de renforcement circonférentiels (8) est positionnée au moins partiellement radialement à l'intérieur de la couche de travail (6) radialement la plus à l'intérieure.

10. Pneumatique (1) selon l'une des revendications 7 à 9, **caractérisé en ce que** la couche d'éléments de renforcement circonférentiels (8') est positionnée au moins partiellement radialement à l'intérieur de la structure de renfort de type carcasse (2).

11. Pneumatique (1) selon l'une des revendications 1 à 10, **caractérisé en ce que** la structure de renfort de type carcasse (2) est réalisée en deux demi-nappes s'étendant des épaules aux bourrelets.

12. Pneumatique (1) selon l'une des revendications 1 à 11, **caractérisé en ce que** les éléments de renforcement des couches de travail (6, 7) sont en matériau textile.

13. Pneumatique (1) selon l'une des revendications 7 à 12, **caractérisé en ce que** les éléments de renforcement de la couche d'éléments de renforcement circonférentiels (8) sont métalliques et/ou textiles et/ou en verre.

14. Pneumatique (1) selon la revendication 13, **caractérisé en ce que** les éléments de renforcement de la couche d'éléments de renforcement circonférentiels (8) présentent un module d'élasticité supérieur à 6000 N/mm².

## Patentansprüche

1. Luftreifen (1) für ein motorisiertes Zweirad-Fahrzeug, wie ein Motorrad, der mindestens eine Verstärkungsstruktur von der Art Karkasse (2) aufweist, die aus Verstärkungselementen geformt ist, zu beiden Seiten des Luftreifens an einem Wulst (3) verankert ist, dessen Basis dazu bestimmt ist, auf einen Felgensitz montiert zu werden, wobei jeder Wulst (3) sich radial nach außen durch eine Flanke (4) verlängert, wobei die Flanken radial nach außen an einen Laufstreifen (5) anschließen, und unter dem Laufstreifen eine Scheitelverstärkungsstruktur aufweist, die aus mindestens einer Schicht (6, 7) von Verstärkungselementen besteht, Arbeitsschicht genannt, **dadurch gekennzeichnet, dass** die Schicht (6, 7) aus mindestens einem durchgehenden Verstärkungsdraht (9) besteht, der in der zentralen Zone der Schicht Abschnitte (10) bildet, die gleiche mit der Längsrichtung L gebildete Winkel (α, β) aufweisen, wobei die Winkel an den Schnittpunkten mit einer Umfangsebene (XX', YY') gemessen werden, dass zwei benachbarte Abschnitte (10) durch eine Schleife (11) verbunden sind, dass die Abschnitte (10) einen Winkel (α, β) zwischen 10 und 80° mit der Längsrichtung bilden, dass die von den Abschnitten mit der Längsrichtung gebildeten Winkel (α, β) in der Querrichtung variabel sind, und dass die Winkel (β) an den axial äußeren Rändern der Schichten von Verstärkungselementen bezüglich der Winkel der Abschnitte (10) gemessen im Bereich der Äquatorialebene (12) des Luftreifens größer sind.

2. Luftreifen (1) nach Anspruch 1, **dadurch gekennzeichnet, dass** in der zentralen Zone der Schicht (6) die Abschnitte (10) gemäß allen Umfangsebenen den gleichen Abstand zueinander haben.

3. Luftreifen (1) nach Anspruch 1 oder 2, **dadurch gekennzeichnet, dass** die Scheitelverstärkungsstruktur mindestens zwei Schichten (6, 7) von Verstärkungselementen aufweist, und dass die Abschnitte (10) von einer Schicht zur anderen zwischen sich Winkel zwischen 20 und 160° bilden.

4. Luftreifen (1) nach Anspruch 1 bis 3, **dadurch gekennzeichnet, dass** die Winkel (α, β) der Abschnitte (10) monoton von der Äquatorialebene (12) des Luftreifens bis zu den Rändern der Arbeitsschicht (6) variieren.

5. Luftreifen (1) nach Anspruch 1 bis 3, **dadurch gekennzeichnet, dass** die Winkel (α, β) der Abschnitte (10) stufenweise von der Äquatorialebene (12) des Luftreifens bis zu den Rändern der Arbeitsschicht (6) variieren.

6. Luftreifen (1) nach einem der Ansprüche 1 bis 5, **dadurch gekennzeichnet, dass** die Verstärkungselemente der Verstärkungsstruktur von der Art Karkasse (2) mit der Umfangsrichtung einen Winkel zwischen 65° und 90° bilden.

7. Luftreifen (1) nach einem der Ansprüche 1 bis 6, **dadurch gekennzeichnet, dass** die Scheitelverstärkungsstruktur mindestens eine Schicht von Umfangsverstärkungselementen (8) aufweist.

8. Luftreifen (1) nach Anspruch 7, **dadurch gekennzeichnet, dass** die Schicht von Umfangsverstärkungselementen (8) zumindest teilweise radial außerhalb einer Arbeitsschicht (6, 7) positioniert ist.

9. Luftreifen (1) nach Anspruch 7 oder 8, **dadurch gekennzeichnet, dass** die Schicht von Umfangsverstärkungselementen (8') zumindest teilweise radial innerhalb der radial am weitesten innen liegenden Arbeitsschicht (6) positioniert ist.

10. Luftreifen (1) nach einem der Ansprüche 7 bis 9, **dadurch gekennzeichnet, dass** die Schicht von Umfangsverstärkungselementen (8') zumindest teilweise radial innerhalb der Verstärkungsstruktur von der Art Karkasse (2) positioniert ist.

11. Luftreifen (1) nach einem der Ansprüche 1 bis 10, **dadurch gekennzeichnet, dass** die Verstärkungsstruktur von der Art Karkasse (2) aus zwei Halblagen besteht, die sich von den Schultern zu den Wülsten erstrecken.

12. Luftreifen (1) nach einem der Ansprüche 1 bis 11, **dadurch gekennzeichnet, dass** die Verstärkungselemente der Arbeitsschichten (6, 7) aus textilem Material sind.

13. Luftreifen (1) nach einem der Ansprüche 7 bis 12, **dadurch gekennzeichnet, dass** die Verstärkungselemente der Schicht von Umfangsverstärkungselementen (8) aus Metall und/oder aus Textil und/oder aus Glas sind.

14. Luftreifen (1) nach Anspruch 13, **dadurch gekennzeichnet, dass** die Verstärkungselemente der Schicht von Umfangsverstärkungselementen (8) einen Elastizitätsmodul von mehr als 6000 N/mm² aufweisen.

## Claims

1. A tyre (1) for a two-wheeled motorised vehicle such as a motorcycle comprising at least one carcass-type reinforcement structure (2), formed of reinforcement elements, anchored on either side of the tyre to a bead (3) whose base is intended to be mounted on a rim seat, each bead (3) being extended radially towards the outside by a sidewall (4), the sidewalls meeting up radially towards the outside with a tread (5), and comprising under the tread a crown reinforcement structure consisting of at least one layer (6, 7) of reinforcement elements known as a working layer, **characterised in that** said layer (6, 7) consists of at least one continuous reinforcement cord (9) forming portions (10) in the central zone of said layer, said portions displaying identical angles (α, β) formed with the longitudinal direction L, said angles being measured at the points of intersection with a circumferential plane (XX', YY'), **in that** two adjacent portions (10) are linked by a loop (11), **in that** the portions (10) form an angle (α, β) with the longitudinal direction of between 10 and 80°, **in that** the angles (α, β) formed by said portions with the longitudinal direction are variable in the transverse direction and **in that** said angles (β) are greater at the axially outer edges of the layers of reinforcement elements relative to the angles of said portions (10) measured at the level of the equatorial plane (12) of the tyre.

2. A tyre (1) according to Claim 1, **characterised in that**, in the central zone of said layer (6), the portions (10) are equidistant from one another along all circumferential planes.

3. A tyre (1) according to one of Claims 1 or 2, **characterised in that** the crown reinforcement structure comprises at least two layers (6, 7) of reinforcement elements and **in that** from one layer to the next the portions (10) form between them angles of between 20 and 160°.

4. A tyre according to one of Claims 1 to 3, **characterised in that** the angles (α, β) of the portions (10) vary in monotonic manner from the equatorial plane (12) of the tyre as far as the edges of the working layer (6).

5. A tyre (1) according to one of Claims 1 to 3, **characterised in that** the angles (α, β) of the portions (10) vary by stages from the equatorial plane (12) of the tyre as far as the edges of the working layer (6).

6. A tyre (1) according to one of Claims 1 to 5, **characterised in that** the reinforcement elements of the carcass-type reinforcement structure (2) form an angle of between 65° and 90° with the circumferential direction.

7. A tyre (1) according to one of Claims 1 to 6, **characterised in that** the crown reinforcement structure comprises at least one layer of circumferential reinforcement elements (8).

8. A tyre (1) according to Claim 7, **characterised in that** the layer of circumferential reinforcement elements (8) is positioned at least in part radially to the outside of a working layer (6, 7).

9. A tyre (1) according to one of Claims 7 or 8, **characterised in that** the layer of circumferential reinforcement elements (8') is positioned at least in part radially to the inside of the working layer (6) radially furthest to the inside.

10. A tyre (1) according to one of Claims 7 to 9, **characterised in that** the layer of circumferential reinforcement elements (8') is positioned at least in part radially to the inside of the carcass-type reinforcement structure (2).

11. A tyre (1) according to one of Claims 1 to 10, **characterised in that** the carcass-type reinforcement structure (2) is made of two half-plies extending from the shoulders to the beads.

12. A tyre (1) according to one of Claims 1 to 11, **characterised in that** the working layer (6, 7) reinforcement elements are of textile material.

13. A tyre (1) according to one of Claims 7 to 12, **characterised in that** the reinforcement elements of the layer of circumferential reinforcement elements (8) are metal and/or textile and/or glass.

14. A tyre (1) according to Claim 13, **characterised in that** the reinforcement elements of the layer of circumferential reinforcement elements (8) exhibit a modulus of elasticity greater than 6000 N/mm².
